(19) Europäisches Patentamt
European Patent Office
Office européen des brevets

(11) **EP 4 106 056 A1**

(12) **EUROPEAN PATENT APPLICATION**
published in accordance with Art. 153(4) EPC

(43) Date of publication:
**21.12.2022 Bulletin 2022/51**

(21) Application number: **21754596.1**

(22) Date of filing: **29.01.2021**

(51) International Patent Classification (IPC):
***H01M 4/62*** *(2006.01)* ***C08K 3/01*** *(2018.01)*
***C08L 1/08*** *(2006.01)* ***C08L 9/06*** *(2006.01)*
***H01M 4/13*** *(2010.01)* ***H01M 4/134*** *(2010.01)*
***H01M 4/136*** *(2010.01)*

(52) Cooperative Patent Classification (CPC):
**C08K 3/01; C08L 1/08; C08L 9/06; H01M 4/13; H01M 4/134; H01M 4/136; H01M 4/62;** Y02E 60/10

(86) International application number:
**PCT/JP2021/003287**

(87) International publication number:
**WO 2021/161813 (19.08.2021 Gazette 2021/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.02.2020 JP 2020023693**
**14.02.2020 JP 2020023694**
**14.02.2020 JP 2020023695**

(71) Applicant: **Nippon Paper Industries Co., Ltd.**
**Tokyo 114-0002 (JP)**

(72) Inventors:
- **SAKAJIRI Takayuki**
  **Tokyo 114-0002 (JP)**
- **INOUE Kazuhiko**
  **Tokyo 114-0002 (JP)**
- **NISHIDE Daisuke**
  **Tokyo 114-0002 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **BINDER FOR NONAQUEOUS ELECTROLYTE SECONDARY BATTERIES, ELECTRODE COMPOSITION FOR NONAQUEOUS ELECTROLYTE SECONDARY BATTERIES, ELECTRODE FOR NONAQUEOUS ELECTROLYTE SECONDARY BATTERIES, NONAQUEOUS ELECTROLYTE SECONDARY BATTERY AND METHOD FOR PRODUCING BINDER FOR NONAQUEOUS ELECTROLYTE SECONDARY BATTERIES**

(57) A binder for non-aqueous electrolyte secondary batteries, said binder containing a carboxymethyl cellulose and/or a salt thereof, while being characterized in that the carboxymethyl cellulose and/or a salt thereof satisfies the conditions (A) and (B) described below. Condition (A): The degree of carboxymethyl substitution per glucose unit is from 0.5 to 1.5. Condition (B): The viscosity ratio of the viscosity Vb (30 rpm, 23°C) of an aqueous dispersion thereof having a solid content of 3% (w/v) to the viscosity Va (30 rpm, 23°C) of an aqueous dispersion thereof having a solid content of 2% (w/v), namely $Vr_1 = Vb/Va$ satisfies $Vr_1 > 3$.

EP 4 106 056 A1

## Description

Technical Field

The present invention relates to a binder for non-aqueous electrolyte secondary batteries, an electrode composition for non-aqueous electrolyte secondary batteries, an electrode for non-aqueous electrolyte secondary batteries, a non-aqueous electrolyte secondary battery, and a method for producing a binder for non-aqueous electrolyte secondary batteries.

Background Art

In recent years, with the rapid spread of small portable terminals represented by smartphones, tablets, and the like, there has been an increasing demand for small batteries having high energy density, which is used for driving them.

In general, a graphite-based material is used as an electrode active material for negative electrode of a lithium ion secondary batteries, but the theoretical capacity of the graphite-based material is 372 mAh/g ($LiC_6$), which is currently close to the limit.

Further, in order to improve the energy density of the lithium ion secondary battery, it is necessary to select a new material. As such, materials obtained by alloying lithium with silicon, tin, or the like having the third lowest potential after carbon and lithium and having a large specific capacity have attracted attention.

Among these materials, silicon can occlude up to 4.4 lithium atoms with respect to 1 silicon atom in a molar ratio. Theoretically, silicon can secure a capacity about 10 times as much as the graphite-based carbon material. However, when the silicon particles occlude lithium, the volume of the silicon particles swells to about three to four times. This causes a problem of significant low durability, that is, deterioration progresses due to repeated charge/discharge, and the capacity decreases. When this phenomenon is analyzed in detail, it has been confirmed that when lithium is inserted into the electrode active material containing silicon, fine cracks are generated in the electrode due to volume expansion, the electrolyte solution enters the fine cracks, and a new coating (SEI layer) is formed. At this time, irreversible capacity that does not return to the original capacity is generated, and as a result, the battery capacity decreases. This phenomenon appears in a change in charge-discharge efficiency during the cycle. In particular, the decrease in the cycle efficiency at the initial stage of the cycle where the volume change is large has a great influence on the life of a battery combined with a positive electrode having high charge-discharge efficiency. Therefore, when an electrode active material containing silicon is used, it is an important problem to minimize a change in the electrode structure due to this volume expansion.

In such a situation, Patent Literature 1 proposes that by using a negative electrode material in which carbon particles are modified with a silane coupling agent, an electrode having excellent durability and excellent charge-discharge cycles can be obtained even when a silicon-based compound is used.

Further, Patent Literature 2 proposes that niobium oxide be attached to a silicon-based compound to improve durability.

In Patent Literature 1 and Patent Literature 2, the negative electrode active material is improved, but a binder used for the negative electrode is also required to be further improved. For example, it is conceivable that using a large amount of binder can suppress swelling of the electrode and generation of irreversible capacity. However, using a large amount of binder increases the viscosity of a slurry for forming the electrode active material layer, so that sufficient battery performance may not be obtained or it may be difficult to form the electrode.

Citation List

Patent Literature

Patent Literature 1: JP 5599527 B2
Patent Literature 2: JP 2017-174829 A

Summary of Invention

Technical Problem

An object of the present invention is to provide: a binder for non-aqueous electrolyte secondary batteries, which can provide a battery having excellent performance even when an electrode active material containing silicon is used, and a method for producing the same; an electrode composition for non-aqueous electrolyte secondary batteries, which contains the binder for non-aqueous electrolyte secondary batteries; and an electrode for non-aqueous electrolyte secondary batteries and a non-aqueous electrolyte secondary battery, which use the electrode composition for non-aqueous electrolyte secondary batteries.

As a result of intensive studies, the present inventors have found that the above problems can be solved by setting, within a specific range, the ratio of the viscosity of a predetermined component contained in a binder at a predetermined solid content concentration.

That is, according to the present invention, provided are:

(1) A binder for non-aqueous electrolyte secondary batteries, the binder containing carboxymethyl cellulose and/or a salt of the carboxymethyl cellulose, wherein the carboxymethyl cellulose and/or the salt of the carboxymethyl cellulose satisfies Conditions (A) and (B) described below:

Condition (A): a degree of carboxymethyl substitution per glucose unit is from 0.5 to 1.5; and
Condition (B): a viscosity ratio of a viscosity Vb at 30 rpm and 23°C of an aqueous dispersion of the carboxymethyl cellulose and/or the salt of the carboxymethyl cellulose having a solid content of 3 w/v% to a viscosity Va at 30 rpm and 23°C of an aqueous dispersion of the carboxymethyl cellulose and/or the salt of the carboxymethyl cellulose having a solid content of 2 w/v%, namely $Vr_1 = Vb/Va$ satisfies $Vr_1 > 3$;

(2) A binder for non-aqueous electrolyte secondary batteries, the binder containing carboxymethyl cellulose and/or a salt of the carboxymethyl cellulose and styrene-butadiene rubber, wherein the binder satisfies Conditions (A') and (C) described below:

Condition (A'): a degree of carboxymethyl substitution of the carboxymethyl cellulose and/or the salt of the carboxymethyl cellulose per glucose unit is from 0.5 to 1.5; and
Condition (C): a viscosity ratio of a viscosity Va at 30 rpm and 23°C of an aqueous dispersion of the carboxymethyl cellulose and/or the salt of the carboxymethyl cellulose having a solid content of 2 w/v% to a viscosity $V_{SBR}$ at 30 rpm and 23°C of an aqueous dispersion of the styrene-butadiene rubber having a solid content of 48 w/v%, namely $Vr_2 = Va/V_{SBR}$ satisfies $Vr_2 < 50$;

(3) A binder for non-aqueous electrolyte secondary batteries, the binder containing carboxymethyl cellulose and/or a salt of the carboxymethyl cellulose, wherein the carboxymethyl cellulose and/or the salt of the carboxymethyl cellulose satisfies Conditions (A) and (D) described below:

Condition (A): a degree of carboxymethyl substitution per glucose unit is from 0.5 to 1.5; and
Condition (D): a ratio of a loss modulus G" to a storage modulus G' of an aqueous dispersion of the carboxymethyl cellulose and/or the salt of the carboxymethyl cellulose having a solid content of 2% (w/v), namely $\tan \delta = G''/G'$ always satisfies $\tan \delta > 1$, when applying a strain of 0.1 to 1000% at a measurement temperature of 23°C;

(4) An electrode composition for non-aqueous electrolyte secondary batteries, the electrode composition including: the binder for non-aqueous electrolyte secondary batteries according to any one of (1) to (3); and an electrode active material;
(5) The electrode composition for non-aqueous electrolyte secondary batteries according to (4), wherein a content of a silicon-based active material contained in the electrode active material is 0.1 mass% or more;
(6) An electrode for non-aqueous electrolyte secondary batteries, the electrode using the electrode composition for non-aqueous electrolyte secondary batteries according to (4) or (5) ;
(7) A non-aqueous electrolyte secondary battery using the electrode composition for non-aqueous electrolyte secondary batteries according to (4) or (5);
(8) A method for producing a binder for non-aqueous electrolyte secondary batteries, the binder containing carboxymethyl cellulose and/or a salt of the carboxymethyl cellulose, the method including incorporating carboxymethyl cellulose and/or the salt of the carboxymethyl cellulose satisfying Conditions (A) and (B) described below:

Condition (A): a degree of carboxymethyl substitution per glucose unit is from 0.5 to 1.5; and
Condition (B): a viscosity ratio of a viscosity Vb at 30 rpm and 23°C of an aqueous dispersion of the carboxymethyl cellulose and/or the salt of the carboxymethyl cellulose having a solid content of 3 w/v% to a viscosity Va at 30 rpm and 23°C of an aqueous dispersion of the carboxymethyl cellulose and/or the salt of the carboxymethyl cellulose having a solid content of 2 w/v%, namely $Vr_1 = Vb/Va$ satisfies $Vr_1 > 3$;

(9) A method for producing a binder for non-aqueous electrolyte secondary batteries, the binder containing carboxymethyl cellulose and/or a salt of the carboxymethyl cellulose and styrene-butadiene rubber, the method including incorporating carboxymethyl cellulose and/or the salt of the carboxymethyl cellulose satisfying Conditions (A') and (C) described below:

Condition (A'): a degree of carboxymethyl substitution of the carboxymethyl cellulose and/or the salt of the carboxymethyl cellulose per glucose unit is from 0.5 to 1.5; and
Condition (C): a viscosity ratio of a viscosity Va at 30 rpm and 23°C of an aqueous dispersion of the carboxymethyl cellulose and/or the salt of the carboxymethyl cellulose having a solid content of 2 w/v% to a viscosity $V_{SBR}$ at 30 rpm and 23°C of an aqueous dispersion of the styrene-butadiene rubber having a solid content of 48 w/v%, namely $Vr_2 = Va/V_{SBR}$ satisfies $Vr_2 < 50$; and

(10) A method for producing a binder for non-aqueous electrolyte secondary batteries, the binder containing carboxymethyl cellulose and/or a salt of the carboxymethyl cellulose, the method including incorporating the carboxymethyl cellulose and/or the salt of the carboxymethyl cellulose satisfying Conditions (A) and (D) described below:

Condition (A): a degree of carboxymethyl substitution per glucose unit is from 0.5 to 1.5; and
Condition (D): a ratio of a loss modulus G" to a storage modulus G' of an aqueous dispersion of the carboxymethyl cellulose and/or the salt of the carboxymethyl cellulose having a solid content of 2 w/v%, namely $\tan \delta = G''/G'$ always satisfies $\tan \delta > 1$, when applying a strain of 0.1 to 1000% at a measurement temperature of 23°C.

Advantageous Effects of Invention

According to the present invention, even when an electrode active material containing silicon is used, the followings can be provided: a binder for non-aqueous electrolyte secondary batteries, which is capable of obtaining a battery having excellent performance; an electrode composition for non-aqueous electrolyte secondary batteries, which contains the binder for non-aqueous electrolyte secondary batteries; and an electrode for non-aqueous electrolyte secondary batteries and a non-aqueous electrolyte secondary battery, which use the electrode composition for non-aqueous electrolyte secondary batteries.

Description of Embodiments

Hereinafter, a binder for non-aqueous electrolyte secondary batteries, an electrode composition for non-aqueous electrolyte secondary batteries, an electrode for non-aqueous electrolyte secondary batteries, a non-aqueous electrolyte secondary battery, and a method for producing a binder for non-aqueous electrolyte secondary batteries according to embodiments of the present invention will be described.
A binder for non-aqueous electrolyte secondary batteries according to a first aspect of the present invention, the binder containing a carboxymethyl cellulose and/or a salt thereof, while being characterized in that the carboxymethyl cellulose and/or a salt thereof satisfies Conditions (A) and (B) described below.
Condition (A): The degree of carboxymethyl substitution per glucose unit is from 0.5 to 1.5.
Condition (B): The viscosity ratio of the viscosity Vb (30 rpm, 23°C) of an aqueous dispersion thereof having a solid content of 3% (w/v) to the viscosity Va (30 rpm, 23°C) of an aqueous dispersion thereof having a solid content of 2% (w/v), namely $Vr_1 = Vb/Va$ satisfies $Vr_1 > 3$.
A binder for non-aqueous electrolyte secondary batteries according to a second aspect of the present invention, the binder containing a carboxymethyl cellulose and/or a salt thereof and styrene-butadiene rubber, while being characterized in that they satisfy Conditions (A') and (C) described below.
Condition (A'): The degree of carboxymethyl substitution of carboxymethyl cellulose and/or a salt thereof per glucose unit is from 0.5 to 1.5.
Condition (C): The viscosity ratio of the viscosity Va (30 rpm, 23°C) of an aqueous dispersion of carboxymethyl cellulose and/or a salt thereof having a solid content of 2% (w/v) to the viscosity $V_{SBR}$ (30 rpm, 23°C) of an aqueous dispersion of styrene-butadiene rubber having a solid content of 48% (w/v), namely $Vr_2 = Va/V_{SBR}$ satisfies $Vr_2 < 50$.
A binder for non-aqueous electrolyte secondary batteries according to a third aspect of the present invention, the binder containing a carboxymethyl cellulose and/or a salt thereof, while being characterized in that the carboxymethyl cellulose and/or the salt thereof satisfies Conditions (A) and (D) described below.
Condition (A): The degree of carboxymethyl substitution per glucose unit is from 0.5 to 1.5.
Condition (D): The ratio of the loss modulus G" to the storage modulus G' of the aqueous dispersion thereof having a solid content of 2% (w/v), namely $\tan \delta = G''/G'$ always satisfies $\tan \delta > 1$, when applying a strain of 0.1 to 1000% at a measurement temperature of 23°C.

<Binder for Non-aqueous Electrolyte Secondary Batteries>

The binder for non-aqueous electrolyte secondary batteries according to the present invention contains carboxymethyl cellulose and/or a salt thereof.

<Carboxymethyl Cellulose and/or Salt Thereof>

The carboxymethyl cellulose and/or a salt thereof (hereinafter, it may be abbreviated as CMC) used in the present invention has a structure in which a hydroxyl group in a glucose unit constituting the cellulose is substituted with a carboxymethyl ether group. The carboxymethyl cellulose may be in the form of a salt. Examples of the salt of carboxymethyl cellulose include metal salts such as carboxymethyl cellulose sodium salt.

In the present invention, cellulose means a polysaccharide having a structure in which D-glucopyranose (also simply referred to as "glucose unit" or "anhydroglucose") is linked by β, 1-4 bonds. Cellulose is generally classified into natural cellulose, regenerated cellulose, fine cellulose, microcrystalline cellulose excluding an amorphous region, and the like, in accordance with origin, production method, and the like.

Examples of the natural cellulose include bleached or unbleached pulp, purified linters, and cellulose produced by microorganisms such as acetic acid bacteria. The raw material of the bleached or unbleached pulp is not particularly limited, and examples thereof include wood, cotton, straw, and bamboo. The method for producing the bleached or unbleached pulp is also not particularly limited, and examples thereof include a mechanical method, a chemical method, or a method combining a mechanical method and a chemical method. Examples of the bleached or unbleached pulp include mechanical pulp, chemical pulp, groundwood pulp, sulfite pulp, kraft pulp, and pulp for papermaking. Examples of the bleached or unbleached pulp also include chemically purified dissolving pulp which is a main raw material of artificial fibers, cellophane, and the like, and is mainly dissolved in a chemical to be used.

Examples of the regenerated cellulose include regenerated cellulose obtained by dissolving cellulose in a solvent such as a cuprammonium solution, a cellulose xanthate solution, or a morpholine derivative, and spinning the cellulose again.

Examples of the fine cellulose include fine cellulose obtained by depolymerizing a cellulose-based material such as natural cellulose or regenerated cellulose by acid hydrolysis, alkaline hydrolysis, enzymolysis, blasting, vibration ball milling, or the like, and fine cellulose obtained by mechanically treating a cellulose-based material.

In producing the CMC used in the present invention, a publicly known method for producing CMC can be applied. For example, CMC can be produced by treating cellulose with a mercerizing agent (alkali) to prepare mercerized cellulose (alkali cellulose), and then adding an etherifying agent to the mercerized cellulose to cause an etherification reaction.

As the raw material of the cellulose, the above-mentioned cellulose can be used without limitation, but cellulose having a high degree of cellulose purity is preferred, and dissolving pulp or linters are more preferred. By using these, CMC having a high degree of purity can be obtained.

Examples of the mercerizing agent include alkali metal hydroxide salts such as sodium hydroxide and potassium hydroxide. Examples of the etherifying agent include monochloroacetic acid and sodium monochloroacetate.

In a method for producing general water-soluble carboxymethyl cellulose, the molar ratio of the mercerizing agent to the etherifying agent (mercerizing agent/etherifying agent) is generally 2.00 to 2.45 when monochloroacetic acid is used as the etherifying agent. The reason is that 2.00 or more of the above molar ratio ensures a sufficient etherification reaction, and thus unreacted monochloroacetic acid can be prevented from remaining and being wasted. When the molar ratio is 2.45 or less, it is possible to prevent the progress of a side reaction between an excessive mercerizing agent and monochloroacetic acid and formation a glycolic acid alkali metal salt, which is economical.

In the present invention, the CMC may be a commercially available product. Examples of the commercially available product include "SUNROSE" (trade name) manufactured by Nippon Paper Industries Co., Ltd.

In addition, the ratio of a group substituted with a carboxymethyl ether group ($-OCH_2COOH$) among hydroxyl groups (-OH) in a glucose unit constituting cellulose can be represented as the degree of etherification of CMC.

In the CMC used in the present invention, the degree of carboxymethyl substitution per glucose unit (hereinafter, it may be referred to as "CM-DS" or "DS value") satisfies 0.5 to 1.5. When the CM-DS is 0.5 or more, solubility in water can be kept good, and generation of an undissolved material can be suppressed. In addition, when the CM-DS is 1.5 or less, an increase in the stringiness of the liquid can be suppressed, and the handling can be easily maintained. In addition, the CM-DS of the CMC according to the present invention satisfies 0.5 to 1.5, preferably 0.7 to 1.5, and more preferably 1.0 to 1.5.

The method for measuring the degree of substitution of a carboxymethyl group is as follows:
About 2.0 g of a sample is precisely weighed, and put in a 300 mL stoppered Erlenmeyer flask. A solution having an amount of 100 mL, which is obtained by adding 100 mL of special class concentrated nitric acid to 1000 mL of methanol, is added to the flask, and the mixture is shaken for 3 hours to transform a salt of carboxymethyl cellulose (CMC) into H-CMC (hydrogen-type carboxymethyl cellulose). Precisely weighed 1.5 to 2.0 g of the bone dry H-CMC is put into a 300 mL stoppered Erlenmeyer flask. H-CMC is moistened with 15 mL of 80% methanol, 100 mL of 0.1N-NaOH is added thereto, and the mixture is shaken at room temperature for 3 hours. Using phenolphthalein as an indicator, excess NaOH is back-titrated with 0.1N-$H_2SO_4$, and the degree of carboxymethyl substitution (DS value) is calculated by the following equations.

$$A = [(100 \times F' - 0.1N\text{-}H_2SO_4\ (mL) \times F) \times 0.1]/(\text{bone dry mass (g) of H-CMC})$$

$$\text{Degree of carboxymethyl substitution} = 0.162 \times A/(1 - 0.058 \times A)$$

F' : Factor of 0.1N-$H_2SO_4$

F: Factor of 0.1N-NaOH

In addition, as for the CMC used in the binder for non-aqueous electrolyte secondary batteries according to the first aspect of the present invention, the viscosity ratio of the viscosity Vb (30 rpm, 23°C) of an aqueous dispersion thereof having a solid content of 3% (w/v) to the viscosity Va (30 rpm, 23°C) of an aqueous dispersion thereof having a solid content of 2% (w/v), namely $Vr_1$ = Vb/Va preferably satisfies $Vr_1 > 3$, more preferably $Vr_1 > 3.2$, and still more preferably $Vr_1 > 3.4$. Additionally, the viscosity ratio $Vr_1$ is preferably $Vr_1 < 10$.

When the viscosity ratio $Vr_1 > 3$ is satisfied, it can be determined that the viscosity difference associated with the concentration change of CMC is large. When the viscosity difference associated with the concentration change is large, it becomes possible to easily adjust the viscosity of the laterdescribed electrode composition for non-aqueous electrolyte secondary batteries (hereinafter, it may be referred to as an electrode composition).

Here, in the case of preparing an electrode containing a silicon-based compound as an electrode active material, it is conceivable to add a large amount of CMC as a binder in order to improve the capacity retention rate. However, a large amount of added CMC may cause an increase of the viscosity of the electrode composition. When the viscosity of the electrode composition for non-aqueous electrolyte secondary batteries increases, the hardness of a resulting coating layer (electrode active material layer) tends to increase. When an electrode composition for non-aqueous electrolyte secondary batteries, which has a high viscosity, is used, the flexibility of the coating layer decreases, and a crack may occur in the coating layer.

As in the present invention, when the viscosity ratio $Vr_1 > 3$, a large amount of CMC can be contained. For example, 5 to 6 mass% of CMC in terms of solid content can be contained in the electrode composition.

The method for measuring the viscosity is as follows:

Carboxymethyl cellulose or a salt thereof is weighed out into a 1000-mL glass beaker and dispersed in 900 mL of distilled water to prepare an aqueous dispersion in such a manner that the aqueous dispersion has a desired solid content concentration. The aqueous dispersion is stirred at 25°C using a stirrer at 600 rpm for 3 hours. Thereafter, the viscosity was measured using a rheometer (MCR102, manufactured by Anton Paar GmbH) on a parallel plate having a diameter of 24.98 mm under conditions of 23°C, a clearance of 1 mm, 30 rpm, and 120 seconds.

In addition, as for the CMC used in the binder for non-aqueous electrolyte secondary batteries according to the third aspect of the present invention, the ratio of the loss modulus G" to the storage modulus G' of the aqueous dispersion thereof having a solid content of 2% (w/v), namely $\tan\delta = G''/G'$ preferably always satisfies $\tan\delta > 1$, when applying a strain of 0.1 to 1000% at a measurement temperature of 23°C.

Here, when the tendency of $\tan\delta$ changes due to strain (when $\tan\delta < 1$ (a state in which the loss modulus G" is smaller than the storage modulus G'), or $\tan\delta > 1$ (state in which loss modulus G" is larger than the storage modulus G') is caused by strain), it is considered that the change in elasticity is severe. In such a case, upon forming an electrode composition (slurry) containing a binder and an electrode active material, if CMC is localized in the electrode composition due to adsorption to the electrode active material or the like, defects easily occur, such as occurrence of coating unevenness in applying the electrode composition to a current collector with a constant load.

On the other hand, in the above range, when $\tan\delta > 1$ is satisfied regardless of any strain, the tendency of elasticity is constant regardless of the presence or absence of adsorption of CMC to the electrode active material or the like, that is, regardless of the presence or absence of localization of CMC upon forming the electrode composition. Thus, occurrence of coating unevenness in applying the electrode composition to the current collector with a constant load can be suppressed. Therefore, coating unevenness is less likely to occur in forming the electrode active material layer (application layer), and a battery having good battery performance such as an excellent capacity retention rate can be manufactured.

In addition, in the case of preparing an electrode containing a silicon-based compound as an electrode active material, it is conceivable to add a large amount of CMC as a binder in order to improve the capacity retention rate. However, a large amount of added CMC may cause an increase of the viscosity of the electrode composition. When the viscosity of the electrode composition for non-aqueous electrolyte secondary batteries is increased, coatability may be deteriorated, such as occurrence of coating unevenness.

As in the present invention, in the case where the ratio of the loss modulus G" to the storage modulus G' of the aqueous dispersion of the carboxymethyl cellulose and/or the salt of the carboxymethyl cellulose having a solid content of 2% (w/v), namely $\tan \delta = G''/G'$ always satisfies $\tan \delta > 1$, when applying a strain of 0.1 to 1000% at a measurement temperature of 23°C, a large amount of CMC can be contained. For example, 5 to 6 mass% of CMC in terms of solid content can be contained in the electrode composition.

In addition, even when a large amount of CMC is contained as described above, the excellent balance between the coatability of the electrode composition and the capacity retention rate of the resulting battery can be ensured.

The method for measuring the storage modulus G' and the loss modulus G" is as follows:
The storage modulus G' and the loss modulus G" were measured using a rheometer (MCR102, manufactured by Anton Paar GmbH) on a parallel plate having a diameter of 24.98 mm under conditions of 23°C, a clearance of 1 mm, a strain of 0.0001 to 1000%, and an angular velocity of 1/10 seconds.

The CMC used in the present invention may be one kind, or a combination of two or more kinds of CMCs having different degrees of etherification, CM-DS, viscosities, molecular weights, and the like.

<Styrene-Butadiene Rubber>

The binder for non-aqueous electrolyte secondary batteries according to the present invention may further contain styrene-butadiene rubber (hereinafter, it may be abbreviated as SBR) as necessary.

The styrene-butadiene rubber used in the present invention can be used without limitation, and for example, commercially available products and the like can also be used.

Furthermore, in the binder for non-aqueous electrolyte secondary batteries according to the second aspect of the present invention, a viscosity ratio of a viscosity Va (30 rpm, 23°C) of an aqueous dispersion of CMC having a solid content of 2% (w/v) to a viscosity $V_{SBR}$ (30 rpm, 23°C) of an aqueous dispersion of SBR having a solid content of 48% (w/v), namely $Vr_2 = Va/V_{SBR}$ preferably satisfies $Vr_2 < 50$, more preferably $Vr_2 < 40$, and still more preferably $Vr_2 < 30$.

CMC and SBR can be used in combination as a binder in a non-aqueous electrolyte secondary battery, but the viscosity difference between CMC as a water-soluble polymer and SBR as a latex is greatly different. Here, when a difference in viscosity between CMC and SBR is large, CMC and SBR are hardly mixed when used in combination, and aggregate may be generated. When the aggregate is generated, cracks are generated in the electrode from the aggregate, and the like, leading to deterioration of the battery performance when producing a non-aqueous electrolyte secondary battery.

Therefore, the viscosity difference between CMC and SBR is preferably small. A viscosity ratio of the viscosity Va (30 rpm, 23°C) of an aqueous dispersion of the CMC having a solid content of 2% (w/v) to the viscosity $V_{SBR}$ (30 rpm, 23°C) of an aqueous dispersion of the SBR having a solid content of 48% (w/v), namely $Vr_2 = Va/V_{SBR}$ satisfies $Vr_2 < 50$, thereby making it possible to suppress the occurrence of aggregate.

In addition, in the case of preparing an electrode containing a silicon-based compound as an electrode active material, it is conceivable to add a large amount of CMC as a binder in order to improve the capacity retention rate. However, a large amount of added CMC may generate aggregate such as spots and clumping, leading to deterioration of aggregability. As in the present invention, when the viscosity ratio $Vr_2$ is less than 50, aggregation is less likely to occur and an electrode having good aggregability can be obtained, as well as a battery having an excellent capacity retention rate can be obtained by using this electrode.

Therefore, when the above-described viscosity ratio $Vr_2$ is less than 50, a large amount of CMC can be contained. For example, 5 to 6 mass% of CMC in terms of solid content can be contained in the electrode composition.

The method for measuring the viscosity is as follows:
Carboxymethyl cellulose or a salt thereof, and styrene-butadiene rubber are weighed out into a 1000-mL glass beaker and dispersed in 900 mL of distilled water to prepare an aqueous dispersion in such a manner that the aqueous dispersion has a desired solid content concentration respectively. The aqueous dispersion is stirred at 23°C using a stirrer at 600 rpm for 3 hours. Thereafter, the viscosity was measured using a rheometer (MCR102, manufactured by Anton Paar GmbH) on a parallel plate having a diameter of 24.98 mm under conditions of 23°C, a clearance of 1 mm, 30 rpm, and 120 seconds.

<Electrode Composition for Non-aqueous Electrolyte Secondary Batteries>

The electrode composition for non-aqueous electrolyte secondary batteries (hereinafter, it may be referred to as an "electrode composition") according to the present invention contains the binder for non-aqueous electrolyte secondary batteries, preferably further contains an electrode active material, and may contain other components such as a conductive assistant used as necessary.

That is, in the present invention, the binder for non-aqueous electrolyte secondary batteries can constitute an electrode composition together with the electrode active material. In this case, the amount of the binder for non-aqueous electrolyte secondary batteries in the electrode composition is preferably 1 to 10 mass%, more preferably 3 to 10 mass% with respect to the total amount of the electrode composition.

<Electrode Active Material>

The electrode active material contained in the electrode composition is a negative electrode active material when used for an electrode for non-aqueous electrolyte secondary batteries for a negative electrode, and is a positive electrode active material when used for an electrode for non-aqueous electrolyte secondary batteries for a positive electrode.

Examples of the negative electrode active material include: graphite materials such as graphite (natural graphite, artificial graphite, or the like), coke, and carbon fiber; elements capable of forming an alloy with lithium, that is, elements such as silicon-based compounds, Al, Sn, Ag, Bi, Mg, Zn, In, Ge, Pb, and Ti; compounds containing an element capable of forming alloy with lithium; composites of an element capable of forming an alloy with lithium and the compound, and carbon and/or the graphite material; and a nitride containing lithium. Among them, graphite materials and silicon-based compounds are preferred, and silicon particles or silicon oxide particles as silicon-based compounds and graphite are more preferred.

Note that the silicon oxide in the present invention is represented by $SiO_x$ ($0 < x \leq 2$). In the present invention, a complex of a silicon-based compound and a graphite material is more suitable as the negative electrode active material.

When the negative electrode active material is a complex of a graphite material and a silicon-based compound, the blending ratio of the graphite material to the silicon-based compound is preferably 10:90 to 90:10, and more preferably 50:50 to 80:20. In 100 mass% of the negative electrode active material, the content of the silicon-based active material is preferably 0.1 mass% or more, more preferably 10 mass% or more, and still more preferably 50 mass% or more.

As the positive electrode active material, a positive electrode active material based on $LiFePO_4$ or $LiMe_xO_y$ (Me means transition metal containing at least one of Ni, Co, and Mn; x and y mean any number) is preferable.

The content of the electrode active material in the electrode composition is usually 88 to 98 mass%, preferably 89 to 98 mass%, more preferably 90 to 98 mass%, still more preferably 91 to 97 mass%, particularly preferably 92 to 96 mass%, and most preferably 93 to 95 mass%.

<Other Components>

In addition, the electrode composition may contain a binder other than the binder for non-aqueous electrolyte secondary batteries according to the present invention. Examples of other binders used in the electrode composition for a negative electrode include synthetic rubber-based binders. As the synthetic rubber-based binder, one or more selected from the group consisting of nitrile butadiene rubber, methyl methacrylate butadiene rubber, chloroprene rubber, carboxymodified styrene-butadiene rubber, and latexes of these synthetic rubbers can be used. Among them, styrene-butadiene rubber (SBR) is preferred. In addition, examples of other binders to be used in the electrode composition for a positive electrode include polytetrafluoroethylene (PTFE), in addition to the synthetic rubber-based binders mentioned as the binders for a negative electrode, and among them, polytetrafluoroethylene (PTFE) is preferably used.

The content of the other binder in the electrode composition is usually 1 to 10 mass%, preferably 1 to 6 mass%, and more preferably 1 to 2 mass%.

The electrode composition may contain a conductive assistant as necessary. Examples of the conductive assistant include conductive carbon such as carbon black, acetylene black, Ketjen black and the like. The content of the conductive assistant in the electrode composition is usually 0.01 to 20 mass%, and preferably 0.1 to 10 mass%.

The solvent used in the electrode composition is preferably an aqueous solvent. The kind of aqueous solvent is not particularly limited, but is preferably water, a water-soluble organic solvent, or a mixed solvent thereof, and more preferably water.

The water-soluble organic solvent is an organic solvent that dissolves in water. Examples thereof include methanol, ethanol, 2-propanol, butanol, glycerin, acetone, methyl ethyl ketone, 1,4-dioxane, N-methyl-2-pyrrolidone, tetrahydrofuran (THF), N,N-dimethylformamide (DMF), N,N-dimethylacetamide, dimethyl sulfoxide (DMSO), acetonitrile, methyl triglycol succinate diester, acetic acid, and combinations thereof.

When the mixed solvent is used as the aqueous solvent, the amount of the water-soluble organic solvent in the mixed solvent is preferably 10 mass% or more, more preferably 50 mass% or more, still more preferably 70 mass% or more. The upper limit of the amount is not limited, but is preferably 95 mass% or less, and more preferably 90 mass% or less. The aqueous solvent may contain a water-insoluble organic solvent as long as the effect of the invention is not impaired.

The production conditions of the electrode composition are not particularly limited. For example, other components constituting the electrode composition are added to an aqueous solution of carboxymethyl cellulose and/or a salt thereof, and the solution is mixed with stirring as necessary.

The properties of the electrode composition are also not particularly limited. Examples thereof include a liquid form, a paste form, and a slurry form, and any form may be used.

<Electrode for Non-aqueous Electrolyte Secondary Batteries>

The electrode for non-aqueous electrolyte secondary batteries according to the present invention can be obtained by applying, onto a current collector, the electrode composition for non-aqueous electrolyte secondary batteries obtained in the manner described above. Examples of the application method include blade coating, bar coating, and die coating, and blade coating is preferred. For example, in the case of blade coating, a method of casting, on a current collector, the electrode composition for non-aqueous electrolyte secondary batteries according to the present invention using a coating apparatus such as a doctor blade is exemplified. In addition, the lamination method is not limited to the above specific example, and examples thereof include a method in which the electrode composition is discharged from an extrusion-type injector having a slot nozzle and applied onto a running current collector wound around a backup roll. In the blade coating, the electrode for non-aqueous electrolyte secondary batteries according to the present invention can be obtained by further performing, as necessary after the casting, drying by heating (the temperature is, for example, 80 to 120°C, and the heating time is, for example, 4 to 12 hours) or the like and pressurization by roll pressing or the like.

<Current Collector>

As the current collector, any electric conductor that does not cause a fatal chemical change in the configured electrode or battery can be used. When the electrode is a negative electrode, a current collector for a negative electrode can be used, and when the electrode is a positive electrode, a current collector for a positive electrode can be used.

Examples of the material of the current collector for a negative electrode include stainless steel, nickel, copper, titanium, carbon, copper, and a material obtained by attaching carbon, nickel, titanium, or silver on the surface of copper or stainless steel. Among them, copper or a copper alloy is preferred, and copper is more preferred.

Examples of the material of the current collector for a positive electrode include metals such as aluminum and stainless steel, and aluminum is preferred.

Examples of the shape of the current collector include a net, a punched metal, a foam metal, and a foil processed into a plate shape, and a foil processed into a plate shape is preferred.

<Non-aqueous Electrolyte Secondary Batteries>

The electrode for non-aqueous electrolyte secondary batteries according to the present invention is used as an electrode (at least one of a negative electrode and a positive electrode) of non-aqueous electrolyte secondary batteries. That is, the present invention also provides a non-aqueous electrolyte secondary battery. The non-aqueous electrolyte secondary battery according to the present invention can have a structure in which a positive electrode and a negative electrode are alternately laminated with a separator interposed therebetween and wound many times. In addition, a laminate of the positive electrode, the separator, and the negative electrode wound many times is placed in a battery container, and a non-aqueous electrolyte is injected thereinto and sealed to obtain a non-aqueous electrolyte secondary battery.

The shape of the non-aqueous electrolyte secondary battery is not particularly limited, and a cylindrical type, a square type, a flat type, a coin type, a button type, a sheet type, or the like can be adopted. The material of the battery container is not particularly limited as long as the purpose of preventing entry of moisture into the battery can be achieved, and examples thereof include a laminate of metal, aluminum, or the like.

The separator is usually impregnated with a non-aqueous electrolyte. As the separator, for example, a microporous film or a nonwoven fabric made of polyolefin such as polyethylene or polypropylene can be used.

The non-aqueous electrolyte usually contains a lithium salt and a non-aqueous solvent. Examples of the lithium salt include $LiPF_6$, $LiAsF_6$, $LiBF_4$, and $LiClO_4$. Examples of the non-aqueous solvent include ethylene carbonate, diethyl carbonate, dimethyl carbonate, propylene carbonate, butylene carbonate, and methyl ethyl carbonate. The non-aqueous solvents may be used singly, or a combination of two or more kinds thereof may be used. The concentration of the lithium salt in the non-aqueous electrolyte can be usually used at a concentration of 0.5 to 2.5 mol/L.

## Examples

Hereinafter, embodiments of the present invention will be described in more detail with reference to examples, but the present invention is not limited thereto.

### (Example 1)

<Preparation of CMC>

A solution obtained by dissolving 550 parts of isopropanol and 40 parts of sodium hydroxide in 80 parts of water was added to a twin-screw kneader whose rotation speed was adjusted to 100 rpm, and 100 parts by dry weight when dried at 100°C for 60 minutes of needle pulp (NDP-T, manufactured by Nippon Paper Industries Co., Ltd.) was fed thereto. The mixture was stirred and mixed at 30°C for 90 minutes to prepare mercerized cellulose. While further stirring, 50 parts of monochloroacetic acid was added, and the mixture was stirred for 30 minutes, then heated to 70°C, and subjected to carboxymethylation reaction for 90 minutes. After completion of the reaction, the reaction mixture was neutralized with acetic acid so as to have a pH of about 7, and subjected to deliquoring, drying, and pulverization to obtain a sodium salt of carboxymethylated cellulose having a degree of carboxymethyl substitution of 0.69 (CMC1).

<Preparation of Negative Electrode Plate>

Using a MAZERUSTAR (MAZERUSTAR KK-250S manufactured by Kurabo Industries Ltd.), 0.97 g of 98 mass% graphite powder and 0.97 g of 98 mass% $SiO_x$ powder as negative electrode active materials, 0.01 g of 98 mass% acetylene black (hereinafter, it may be referred to as AB) as a conductive assistant, and 3.0 g of an aqueous dispersion of CMC1 (2% (w/v)) and 63 mg of 48 mass% styrene-butadiene rubber (hereinafter, it may be referred to as SBR) as a binder were mixed to obtain an electrode composition for non-aqueous electrolyte secondary batteries for a negative electrode. Thereafter, the obtained electrode composition for a negative electrode was applied onto a current collector (copper foil of 320 mm length × 170 mm width × 17 μm thickness; NC-WS, manufactured by Furukawa Electric Co., Ltd.) using a 130 μm applicator, dried at room temperature for 30 minutes, and then dried at 60°C for 30 minutes. After drying, pressing was performed at 5.0 kN using a small tabletop roll press (SA-602, manufactured by TESTER SANGYO CO,. LTD.) to obtain a negative electrode plate having a negative electrode active material layer on a current collector.

When the viscosity Va of the aqueous dispersion of CMC1 having a solid content of 2% (w/v), the viscosity Vb of the aqueous dispersion of CMC1 having a solid content of 3% (w/v), and the viscosity $V_{SBR}$ of the aqueous dispersion of SBR having a solid content of 48% (w/v) were measured using a rheometer (MCR102, manufactured by Anton Paar GmbH) at 30 rpm and 23°C, respectively, Va was 825 mPa·s, Vb was 2892 mPa·s, $V_{SBR}$ was 41 mPa·s, the viscosity ratio $Vr_1$ determined by Vb/Va was 3.5, and the viscosity ratio $Vr_2$ determined by $Va/V_{SBR}$ was 20.1.

In addition, the storage modulus G' of an aqueous dispersion of CMC1 having a solid content of 2% (w/v) at a strain of 0.112%, 1.10%, 10.7%, 105%, 196%, 521%, and 1000% at a measurement temperature of 23°C was 0.30 Pa, 0.97 Pa, 3.98 Pa, 4.31 Pa, 2.15 Pa, 0.66 Pa, and 0.12 Pa, respectively. The loss modulus G" thereof at a strain of 0.112%, 1.10%, 10.7%, 105%, 196%, 521%, and 1000% was 9.99 Pa, 10.4 Pa, 10.5 Pa, 10.5 Pa, 9.37 Pa, 7.43 Pa, and 5.94 Pa, respectively. That is, at the strain of 0.112%, 1.10%, 10.7%, 105%, 196%, 521%, and 1000%, the tan $\delta$ obtained by G"/G' was 33.7, 10.8, 2.64, 2.43, 4.35, 11.2, and 51.3, respectively. That is, tan $\delta > 1$ was always satisfied, when applying a strain of 0.1 to 1000%.

<Preparation of Coin-Type Non-aqueous Electrolyte Secondary Battery>

The obtained negative electrode plate and $LiCoO_2$ positive electrode plate (manufactured by Hohsen Corp., weight per unit area: 227.1 g/m$^2$, discharge effective capacity: 145 mAh/g) were each punched into a circle having a diameter of 16 mm, and the punched negative electrode plate and positive electrode plate were vacuum-dried at 120°C for 12 hours. Similarly, a separator (polypropylene separator with a thickness of 20 μm, manufactured by CS Tech Co., Ltd.) was punched into a circle having a diameter of 17 mm, and vacuum-dried at 60°C for 12 hours.

Thereafter, a negative electrode plate was placed in a stainless steel circular dish type container having a diameter of 20.0 mm, then a separator, a positive electrode plate, a spacer (diameter: 15.5 mm, thickness: 1 mm), and a stainless steel washer (manufactured by Hohsen Corp.) were laminated in this order, and then 300 μL of an electrolyte solution (1 mol/L of $LiPF_6$, volume ratio of ethylene carbonate to diethyl carbonate is 1:1) was added to the circular dish type container. This was covered with a stainless steel cap via a polypropylene packing, and sealed with a coin cell crimper (Hohsen Corp.) to obtain a coin-type non-aqueous electrolyte secondary battery.

(Example 2)

A negative electrode plate and a coin-type non-aqueous electrolyte secondary battery were prepared in the same manner as in Example 1 except that the amount of the CMC aqueous dispersion was changed to 5.0 g, and the amount of the negative electrode active material was changed to 0.95 g of 98 mass% graphite powder and 0.95 g of 98 mass% $SiO_x$ powder.

(Comparative Example 1)

A negative electrode plate and a coin-type non-aqueous electrolyte secondary battery were prepared in the same manner as in Example 1 except that the type of CMC was changed to an aqueous dispersion (2% (w/v)) of SUNROSE (trade name; manufactured by Nippon Paper Industries Co., Ltd., MAC500LC, DS value = 0.65, 1% viscosity 4700 mPa·s).

When the viscosity Va of the aqueous dispersion of CMC (MAC500LC) having a solid content of 2% (w/v), the viscosity Vb of the aqueous dispersion of CMC (MAC500LC) having a solid content of 3% (w/v), and the viscosity $V_{SBR}$ of the aqueous dispersion of SBR having a solid content of 48% (w/v) were measured using a rheometer (MCR102, manufactured by Anton Paar GmbH) at 30 rpm and 23°C, respectively, Va was 9535 mPa·s, Vb was 24727 mPa·s, $V_{SBR}$ was 41 mPa·s, the viscosity ratio $Vr_1$ determined from Vb/Va was 2.6, and the viscosity ratio $Vr_2$ determined from $Va/V_{SBR}$ was 232.6.

In addition, the storage modulus G' of an aqueous dispersion of the CMC (MAC500LC) having a solid content of 2% (w/v) at a strain of 0.112%, 1.10%, 10.7%, 105%, 196%, 521%, and 1000% at a measurement temperature of 23°C was 269.8 Pa, 269.3 Pa, 271.1 Pa, 269.4 Pa, 86.4 Pa, 25.4 Pa, and 7.81 Pa, respectively. The loss modulus G" thereof at a strain of 0.112%, 1.10%, 10.7%, 105%, 196%, 521%, and 1000% was 131.2 Pa, 133.4 Pa, 134.8 Pa, 135.6 Pa, 105.4 Pa, 62.8 Pa, and 39.0 Pa, respectively. That is, at the strain of 0.112%, 1.10%, 10.7%, 105%, 196%, 521%, and 1000%, the tan $\delta$ obtained by G"/G' was 0.49, 0.50, 0.50, 0.50, 1.22, 2.47, and 5.00, respectively. That is, tan $\delta > 1$ was not satisfied in some cases under a strain of 0.1 to 1000%.

(Comparative Example 2)

A negative electrode plate and a coin-type non-aqueous electrolyte secondary battery were prepared in the same manner as in Comparative Example 1 except that the amount of the CMC aqueous dispersion was changed to 1.0 g, and the amount of the negative electrode active material was changed to 1.0 g of 98 mass% graphite powder and 1.0 g of 98 mass% $SiO_x$ powder.

(Comparative Example 3)

A negative electrode plate was prepared in the same manner as in Comparative Example 1 except that the amount of the CMC aqueous dispersion was changed to 5.0 g, and the amount of the negative electrode active material was changed to 0.95 g of 98 mass% graphite powder and 0.95 g of 98 mass% $SiO_x$ powder. However, a negative electrode active material layer could not be formed because the viscosity of the electrode composition for a negative electrode was too high. In addition, a film for evaluating the hardness of the coating layer and the flexibility of the coating layer described later could not be formed.

<Evaluation Method>

<Viscosity of CMC in Form of Aqueous Dispersion Having Solid Content of 2% (w/v) and Solid Content of 3% (w/v), and Viscosity of SBR in Form of Aqueous Dispersion Having Solid Content of 48% (w/v)>

The CMC and the SBR used in examples and comparative examples were each weighed out into a 1000-mL glass beaker and dispersed in 900 mL of distilled water to prepare an aqueous dispersion in such a manner that the aqueous dispersion has a desired solid content concentration (solid content of 2% (w/v) or solid content of 3% (w/v)). The aqueous dispersion was stirred at 23°C using a stirrer at 600 rpm for 3 hours. Thereafter, the viscosity was measured in accordance with the method defined in JIS-Z-8803, using a rheometer (MCR102, manufactured by Anton Paar GmbH) on a parallel plate having a diameter of 24.98 mm under conditions of 23°C, a clearance of 1 mm, 30 rpm, and 120 seconds.

The viscosity ratio $Vr_1 = Vb/Va$ was determined from the viscosity Va (30 rpm, 23°C) of an aqueous dispersion of the obtained CMC having a solid content of 2% (w/v) and the viscosity Vb (30 rpm, 23°C) of an aqueous dispersion of the obtained CMC having a solid content of 3% (w/v). Further, the viscosity ratio $Vr_2 = Va/V_{SBR}$ was determined from the viscosity Va (30 rpm, 23°C) of an aqueous dispersion of the obtained CMC having a solid content of 2% (w/v) and the viscosity $V_{SBR}$ (30 rpm, 23°C) of an aqueous dispersion of the SBR having a solid content of 48% (w/v).

<Hardness of Coating Layer>

The hardness of the coating layer was measured using an ultra micro hardness tester (DUH-W201S, manufactured by SHIMADZU CORPORATION) under the conditions of a test force of 2 mN, a load speed of 0.284393 mN/sec, a retention time of 1 sec, a depth scale of 10 μm, and a parameter of 20.

<Brittleness of Coating Layer>

The brittleness of the coating layer that is obtained by cutting the obtained electrode plate into one having a diameter of 16.1 mm, bending it at 180°C, and spreading it again was evaluated according to the following criteria. The results are listed in Table 1. When cracking or peeling of the coating layer is not observed, it indicates that the flexibility of the coating layer is excellent.

A: No cracking or peeling of the coating layer is observed.
B: Cracking of the coating layer is observed.
C: The coating layer is peeled off from the copper foil, and the copper foil is visible.

<Aggregability during Preparation of Slurry>

The protrusion/recess was observed when the copper foil was coated with the slurry (the electrode composition for non-aqueous electrolyte secondary batteries for a negative electrode obtained in each of examples and comparative examples), and the aggregability was evaluated according to the following criteria. The results are listed in Table 1.

A: No protrusion/recess due to aggregates is observed, and the coating surface is uniform.
B: Protrusions/recesses can be recognized in some places.
C: Protrusions/recesses can be recognized in various places.

<Measurement of Storage Modulus G' and Loss Modulus G">

The storage modulus G' and the loss modulus G" were measured using a rheometer (MCR102, manufactured by Anton Paar GmbH) on a parallel plate having a diameter of 24.98 mm under conditions of 23°C, a clearance of 1 mm, a strain of 0.0001 to 1000%, and an angular velocity of 1/10 seconds.

From the storage modulus G' and the loss modulus G" at predetermined strains of the aqueous dispersion of the obtained CMC having a solid content of 2% (w/v), $\tan\delta = G''/G'$ was determined at each strain.

<Coating Unevenness>

With respect to the negative electrode plates obtained in examples and comparative examples, the surface of the coating layer after pressing was visually checked, and evaluated according to the following criteria. The results are listed in the table.

A: The surface of the coating layer is smooth without protrusions/recesses.
B: Protrusions/recesses can be observed in some places.
C: Protrusions/recesses can be observed in various places.

<Discharge Capacity>

In the charge/discharge rate test, 52 cycles were performed in a thermostatic chamber at 25°C using a secondary battery charge/discharge test apparatus (BTS2004, manufactured by NAGANO & Co., Ltd.) and the coin-type non-aqueous electrolyte secondary batteries prepared in examples and comparative examples, with charge/discharge performed in the order of a charging process and a discharging process as one cycle.

As a condition of the charging process, a constant currentconstant voltage (CC-CV) method (CC current: 0.2 C, CV voltage: 4.2 V, final current: 0.02 C) was used in all cycles. As a condition of the discharging process, the final voltage was set to 3.0 V. In the first one cycle, the constant current in the discharging process was performed at 0.2 C, and the discharge capacity A (mAh/g) after the 1st cycle was measured after the discharge.

Until the 52nd cycle thereafter, a constant current in the discharging process was set as described below, and the discharge capacity B (mAh/g) was measured after the 52nd cycle of discharge.

• (Constant Current in Discharging Process in Each Cycle)

2nd to 10th cycles: Constant current 0.2 C in discharging process
11th to 20th cycles: Constant current 1 C in discharging process
21st cycle: Constant current 0.2 C in discharging process
22nd to 31th cycles: Constant current 2 C in discharging process
32nd cycle: Constant current 0.2 C in discharging process
33rd to 42nd cycles: Constant current 3 C in discharging process
43rd to 52nd cycles: Constant current 0.2 C in discharging process

<Capacity Retention Rate>

The capacity retention rate was calculated from the discharge capacities A and B in each cycle test described above by the formula: capacity retention rate (%) = discharge capacity B after 52nd cycle (mAh/g)/discharge capacity A after 1st cycle (mAh/g) × 100.

The results of the above measurement are listed in the following Tables 1 and 2.

[Table 1]

| | Negative electrode active material | | Conductive assistant | Binder for non-aqueous electrolyte secondary batteries | | | | | | | | Blending ratio Negative electrode active material : AB : CMC : SBR | Hardness of coating layer ($N/nm^2$) | Brittleness of coating layer | Aggregability during preparation of slurry | Coating | Evaluation on battery characteristics | | |
|---|---|---|---|---|---|---|---|---|---|---|---|---|---|---|---|---|---|---|---|
| | | | | CMC | | | | | Latex | | | | | | | | | | |
| | Used graphite | Proportion of $SiO_x$ (%) | | Kind | DS value | Viscosity Va (mPa·s) (30 rpm, 25° C) of aqueous dispersion thereof having solid content of 2% (w/v) | Viscosity Vb (mPa·s) (30 rpm, 25° C) of aqueous dispersion thereof having solid content of 3% (w/v) | Viscosity ratio $Vr_1$ = Vb/Va | Kind | Viscosity VSBR (30 rpm, 25° C) of aqueous dispersion of styrene-butadiene rubber having solid content of 48% (w/v) | Viscosity ratio $Vr_2$ = Va/ VSBR | | | | | | Discharge capacity A (mAh/g) | Discharge capacity B (mAh/g) | Capacity retention rete (%) |
| Example 1 | Artificial graphite | 50 | AB | CMC1 | 0.69 | 825 | 2892 | 3.5 | SBR | 41 | 20.1 | 95:0.5: 3:1.5 | 0.06 | A | A | A | 813 | 683 | 84.0 |
| Example 2 | Artificial graphite | 50 | AB | CMC1 | 0.69 | 825 | 2892 | 3.5 | SBR | 41 | 20.1 | 93:0.5: 5:1.5 | 0.15 | A | A | A | 872 | 752 | 86.3 |
| Comparative Example1 | Artificial graphite | 50 | AB | MAC500 LC | 0.65 | 9535 | 24727 | 2.6 | SBR | 41 | 232.6 | 95: 0.5: 3:1.5 | 0.18 | C | C | B | 807 | 552 | 68.5 |

(continued)

| | Negative electrode active material | | | Binder for non-aqueous electrolyte secondary batteries | | | | | | | | Blending ratio Negative electrode active material : AB : CMC : SBR | Hardness of coating layer ($N/nm^2$) | Brittleness of coating layer | Aggregability during preparation of slurry | Coating | Evaluation on battery characteristics | | |
|---|---|---|---|---|---|---|---|---|---|---|---|---|---|---|---|---|---|---|---|
| | | | | CMC | | | | | Latex | | | | | | | | | | |
| | Used graphite | Proportion of $SiO_x$ (%) | Conductive assistant | Kind | DS value | Viscosity Va (mPa·s) (30 rpm, 25° C) of aqueous dispersion thereof having solid content of 2% (w/v) | Viscosity Vb (mPa·s) (30 rpm, 25° C) of aqueous dispersion thereof having solid content of 3% (w/v) | Viscosity ratio $Vr_1$ = Vb/Va | Kind | Viscosity VSBR (30 rpm, 25° C) of aqueous dispersion of styrene-butadiene rubber having solid content of 48% (w/v) | Viscosity ratio $Vr_2$ = Va/VSBR | | | | | | Discharge capacity A (mAh/g) | Discharge capacity B (mAh/g) | Capacity retention rete (%) |
| Comparative Example2 | Artificial graphite | 50 | AB | MAC500 LC | 0.65 | 9535 | 24727 | 2.6 | SBR | 41 | 232.6 | 97:0.5: 1:1.5 | 0.04 | A | A | A | 684 | 122 | 17.8 |
| Comparative Example3 | Artificial graphite | 50 | AB | MAC500 LC | 0.65 | 9535 | 24727 | 2.6 | SBR | 41 | 232.6 | 93: 0.5: 5: 1.5 | - | - | - | - | - | - | - |

[Table 2]

| | Storage modulus G' and loss modulus G" at predetermined strains of aqueous dispersion of CMC having solid content of 2% (w/v) (25 °C) | | | | | | | | | | | | | | | | | | | | |
|---|---|---|---|---|---|---|---|---|---|---|---|---|---|---|---|---|---|---|---|---|---|
| | Strain of 0.112% | | | Strain of 1.10% | | | Strain of 10.7% | | | Strain of 105% | | | Strain of 196% | | | Strain of 521% | | | Strain of 1000% | | |
| | Storage modulus G' (Pa) | Loss modulus G" (Pa) | tan $\delta$ =G"/G' | Storage modulus G' (Pa) | Loss modulus G" (Pa) | tan $\delta$ =G"/G' | Storage modulus G' (Pa) | Loss modulus G" (Pa) | tan $\delta$ =G"/G' | Storage modulus G' (Pa) | Loss modulus G" (Pa) | tan $\delta$ =G"/G' | Storage modulus G' (Pa) | Loss modulus G" (Pa) | tan $\delta$ =G"/G' | Storage modulus G' (Pa) | Loss modulus G" (Pa) | tan $\delta$ =G"/G' | Storage modulus G' (Pa) | Loss modulus G" (Pa) | tan $\delta$ =G"/G' |
| Example 1 | 0.30 | 9.99 | 33.7 | 0.97 | 10.4 | 10.8 | 3.98 | 10.5 | 2.64 | 4.31 | 10.5 | 2.43 | 2.15 | 9.37 | 4.35 | 0.66 | 7.43 | 11.2 | 0.12 | 5.94 | 51.3 |
| Example 2 | 0.30 | 9.99 | 33.7 | 0.97 | 10.4 | 10.8 | 3.98 | 10.5 | 2.64 | 4.31 | 10.5 | 2.43 | 2.15 | 9.37 | 4.35 | 0.66 | 7.43 | 11.2 | 0.12 | 5.94 | 51.3 |
| Comparative Example 1 | 269.8 | 131.2 | 0.49 | 269.3 | 133.4 | 0.50 | 271.1 | 134.8 | 0.50 | 269.4 | 135.6 | 0.50 | 86.4 | 105.4 | 1.22 | 25.4 | 62.8 | 2.47 | 7.81 | 39.0 | 5.00 |
| Comparative Example 2 | 269.8 | 131.2 | 0.49 | 269.3 | 133.4 | 0.50 | 271.1 | 134.8 | 0.50 | 269.4 | 135.6 | 0.50 | 86.4 | 105.4 | 1.22 | 25.4 | 62.8 | 2.47 | 7.81 | 39.0 | 5.00 |
| Comparative Example 3 | 269.8 | 131.2 | 0.49 | 269.3 | 133.4 | 0.50 | 271.1 | 134.8 | 0.50 | 269.4 | 135.6 | 0.50 | 86.4 | 105.4 | 1.22 | 25.4 | 62.8 | 2.47 | 7.81 | 39.0 | 5.00 |

As indicated in Table 1, the binder for non-aqueous electrolyte secondary batteries, the binder containing carboxymethyl cellulose and/or a salt thereof, while being characterized in that the carboxymethyl cellulose and/or a salt thereof satisfies the following Conditions (A) (the degree of carboxymethyl substitution per glucose unit is from 0.5 to 1.5) and (B) (the viscosity ratio of the viscosity Vb (30 rpm, 23°C) of an aqueous dispersion thereof having a solid content of 3% (w/v) to the viscosity Va (30 rpm, 23°C) of an aqueous dispersion thereof having a solid content of 2% (w/v), namely $Vr_1$ = Vb/Va satisfies $Vr_1 > 3$), had low hardness and excellent flexibility when formed into a coating layer. In addition, it has been found that the secondary batteries using such a binder has a good capacity retention rate. On the other hand, in Comparative Example 1 using CMC not satisfying the above conditions, the hardness of the coating layer was high and the flexibility was poor. In Comparative Example 2 in which the added amount of CMC was suppressed, the hardness and flexibility of the coating layer were both provided in a compatible manner, but the capacity retention rate of the secondary battery was poor. In Comparative Example 3 in which the added amount of CMC was increased, the negative electrode active material layer could not be formed because the viscosity of the electrode composition for a negative electrode was too high.

As indicated in Table 1, when using the binder for non-aqueous electrolyte secondary batteries, the binder containing carboxymethyl cellulose and/or a salt thereof and styrene-butadiene rubber, while being characterized in that the carboxymethyl cellulose and/or a salt thereof satisfies the following Conditions (A') (the degree of carboxymethyl substitution of CMC per glucose unit is from 0.5 to 1.5) and (C) (the viscosity ratio of the viscosity Va (30 rpm, 23°C) of the aqueous dispersion of CMC having a solid content of 2% (w/v) to the viscosity Va (30 rpm, 23°C) of the aqueous dispersion of SBR having a solid content of 48% (w/v), namely $Vr_2 = Va/V_{SBR}$ satisfies $Vr_2 < 50$), the generation of aggregates was suppressed during preparation of a slurry. In addition, it has been found that the secondary batteries using such a binder has a good capacity retention rate. On the other hand, in Comparative Example 1 using CMC not satisfying the above conditions, slurry aggregates were generated. In Comparative Example 2 in which the added amount of CMC was suppressed, the generation of aggregates was suppressed during slurry preparation, but the capacity retention rate of the secondary battery was poor. In Comparative Example 3 in which the added amount of CMC was increased, the negative electrode active material layer could not be formed because the viscosity of the electrode composition for a negative electrode was too high.

As indicated in Table 1 and 2, the binder for non-aqueous electrolyte secondary batteries, the binder containing carboxymethyl cellulose and/or a salt thereof, while being characterized in that the carboxymethyl cellulose and/or a salt thereof satisfies the following Conditions (A) (the degree of carboxymethyl substitution per glucose unit is from 0.5 to 1.5) and (D) (the ratio of the loss modulus G" to the storage modulus G' of the aqueous dispersion thereof having a solid content of 2% (w/v), namely $\tan \delta = G''/G'$ always satisfies $\tan \delta > 1$, when applying a strain of 0.1 to 1000% at a measurement temperature of 23°C), the occurrence of coating unevenness when formed into an electrode composition was suppressed. In addition, it has been found that the secondary batteries using such a binder has a good capacity retention rate. On the other hand, in Comparative Example 1 using CMC not satisfying the above conditions, coating unevenness occurred. In Comparative Example 2 in which the added amount of CMC was suppressed, the coating unevenness was suppressed, but the capacity retention rate of the secondary battery was poor. In Comparative Example 3 in which the added amount of CMC was increased, the negative electrode active material layer could not be formed because the viscosity of the electrode composition for a negative electrode was too high.

## Claims

1. A binder for non-aqueous electrolyte secondary batteries, the binder containing carboxymethyl cellulose and/or a salt of the carboxymethyl cellulose,
wherein the carboxymethyl cellulose and/or the salt of the carboxymethyl cellulose satisfies Conditions (A) and (B) described below:

    Condition (A): a degree of carboxymethyl substitution per glucose unit is from 0.5 to 1.5; and
    Condition (B): a viscosity ratio of a viscosity Vb at 30 rpm and 23°C of an aqueous dispersion of the carboxymethyl cellulose and/or the salt of the carboxymethyl cellulose having a solid content of 3 w/v% to a viscosity Va at 30 rpm and 23°C of an aqueous dispersion of the carboxymethyl cellulose and/or the salt of the carboxymethyl cellulose having a solid content of 2 w/v%, namely $Vr_1$ = Vb/Va satisfies $Vr_1 > 3$.

2. A binder for non-aqueous electrolyte secondary batteries, the binder containing carboxymethyl cellulose and/or a salt of the carboxymethyl cellulose and styrene-butadiene rubber,
wherein the binder satisfies Conditions (A') and (C) described below:

    Condition (A'): a degree of carboxymethyl substitution of the carboxymethyl cellulose and/or the salt of the carboxymethyl cellulose per glucose unit is from 0.5 to 1.5; and
Condition (C): a viscosity ratio of a viscosity Va at 30 rpm and 23°C of an aqueous dispersion of the carboxymethyl cellulose and/or the salt of the carboxymethyl cellulose having a solid content of 2 w/v% to a viscosity $V_{SBR}$ at 30 rpm and 23°C of an aqueous dispersion of the styrene-butadiene rubber having a solid content of 48 w/v%, namely $Vr_2 = Va/V_{SBR}$ satisfies $Vr_2 < 50$.

**3.** A binder for non-aqueous electrolyte secondary batteries, the binder containing carboxymethyl cellulose and/or a salt of the carboxymethyl cellulose,
wherein the carboxymethyl cellulose and/or the salt of the carboxymethyl cellulose satisfies Conditions (A) and (D) described below:

Condition (A): a degree of carboxymethyl substitution per glucose unit is from 0.5 to 1.5; and
Condition (D): a ratio of a loss modulus G" to a storage modulus G' of an aqueous dispersion of the carboxymethyl cellulose and/or the salt of the carboxymethyl cellulose having a solid content of 2% (w/v), namely $\tan \delta = G''/G'$ always satisfies $\tan \delta > 1$, when applying a strain of 0.1 to 1000% at a measurement temperature of 23°C.

**4.** An electrode composition for non-aqueous electrolyte secondary batteries, the electrode composition comprising:

the binder for non-aqueous electrolyte secondary batteries according to any one of claims 1 to 3; and
an electrode active material.

**5.** The electrode composition for non-aqueous electrolyte secondary batteries according to claim 4,
wherein a content of a silicon-based active material contained in the electrode active material is 0.1 mass% or more.

**6.** An electrode for non-aqueous electrolyte secondary batteries, the electrode using the electrode composition for non-aqueous electrolyte secondary batteries according to claim 4 or 5.

**7.** A non-aqueous electrolyte secondary battery using the electrode composition for non-aqueous electrolyte secondary batteries according to claim 4 or 5.

**8.** A method for producing a binder for non-aqueous electrolyte secondary batteries, the binder containing carboxymethyl cellulose and/or a salt of the carboxymethyl cellulose, the method comprising
incorporating carboxymethyl cellulose and/or the salt of the carboxymethyl cellulose satisfying Conditions (A) and (B) described below:

Condition (A): a degree of carboxymethyl substitution per glucose unit is from 0.5 to 1.5; and
Condition (B): a viscosity ratio of a viscosity Vb at 30 rpm and 23°C of an aqueous dispersion of the carboxymethyl cellulose and/or the salt of the carboxymethyl cellulose having a solid content of 3 w/v% to a viscosity Va at 30 rpm and 23°C of an aqueous dispersion of the carboxymethyl cellulose and/or the salt of the carboxymethyl cellulose having a solid content of 2 w/v%, namely $Vr_1 = Vb/Va$ satisfies $Vr_1 > 3$.

**9.** A method for producing a binder for non-aqueous electrolyte secondary batteries, the binder containing carboxymethyl cellulose and/or a salt of the carboxymethyl cellulose and styrene-butadiene rubber, the method comprising
incorporating carboxymethyl cellulose and/or the salt of the carboxymethyl cellulose satisfying Conditions (A') and (C) described below:

Condition (A'): a degree of carboxymethyl substitution of the carboxymethyl cellulose and/or the salt of the carboxymethyl cellulose per glucose unit is from 0.5 to 1.5; and
Condition (C): a viscosity ratio of a viscosity Va at 30 rpm and 23°C of an aqueous dispersion of the carboxymethyl cellulose and/or the salt of the carboxymethyl cellulose having a solid content of 2 w/v% to a viscosity $V_{SBR}$ at 30 rpm and 23°C of an aqueous dispersion of the styrene-butadiene rubber having a solid content of 48 w/v%, namely $Vr_2 = Va/V_{SBR}$ satisfies $Vr_2 < 50$.

**10.** A method for producing a binder for non-aqueous electrolyte secondary batteries, the binder containing carboxymethyl cellulose and/or a salt of the carboxymethyl cellulose, the method comprising
incorporating the carboxymethyl cellulose and/or the salt of the carboxymethyl cellulose satisfying Conditions (A) and (D) described below:

Condition (A): a degree of carboxymethyl substitution per glucose unit is from 0.5 to 1.5; and
Condition (D): a ratio of a loss modulus G" to a storage modulus G' of an aqueous dispersion of the carboxymethyl cellulose and/or the salt of the carboxymethyl cellulose having a solid content of 2 w/v%, namely tan $\delta$ = G"/G' always satisfies tan $\delta > 1$, when applying a strain of 0.1 to 1000% at a measurement temperature of 23°C.

## INTERNATIONAL SEARCH REPORT

International application No.
PCT/JP2021/003287

A. CLASSIFICATION OF SUBJECT MATTER
H01M 4/62(2006.01)i; C08K 3/01(2018.01)i; C08L 1/08(2006.01)i; C08L 9/06(2006.01)i; H01M 4/13(2010.01)i; H01M 4/134(2010.01)i; H01M 4/136(2010.01)i
FI: H01M4/62 Z; H01M4/13; H01M4/134; C08L1/08; C08K3/01; C08L9/06; H01M4/136
According to International Patent Classification (IPC) or to both national classification and IPC

B. FIELDS SEARCHED
Minimum documentation searched (classification system followed by classification symbols)
H01M4/62; C08K3/01; C08L1/08; C08L9/06; H01M4/13; H01M4/134; H01M4/136

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2016/039271 A1 (NISSAN CHEMICAL INDUSTRIES, LTD.) 17 March 2016 (2016-03-17) | 1-10 |
| A | WO 2016/031449 A1 (DKS CO., LTD.) 03 March 2016 (2016-03-03) | 1-10 |
| A | WO 2018/062250 A1 (NIPPON PAPER INDUSTRIES CO., LTD.) 05 April 2018 (2018-04-05) | 1-10 |
| A | JP 2017-520885 A (DOW GLOBAL TECHNOLOGIES LLC) 27 July 2017 (2017-07-27) | 1-10 |
| A | JP 2018-156891 A (DKS CO., LTD.) 04 October 2018 (2018-10-04) | 1-10 |

☐ Further documents are listed in the continuation of Box C.
☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 24 March 2021 (24.03.2021) | 06 April 2021 (06.04.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2021/003287

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:
See extra sheet

1. ☒ As all required additional search fees were timely paid by the applicant, this international search report covers all searchable claims.
2. ☐ As all searchable claims could be searched without effort justifying additional fees, this Authority did not invite payment of additional fees.
3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (January 2015)

**INTERNATIONAL SEARCH REPORT**
Information on patent family members

International application No.
PCT/JP2021/003287

| Patent Documents referred in the Report | Publication Date | Patent Family | Publication Date |
|---|---|---|---|
| WO 2016/039271 A1 | 17 Mar. 2016 | CN 106716694 A<br>KR 10-2017-0048363 A<br>TW 201630235 A | |
| WO 2016/031449 A1 | 03 Mar. 2016 | US 2017/0256799 A1<br>EP 3187509 A1<br>CN 106573991 A<br>KR 10-2017-0046155 A<br>TW 201620941 A | |
| WO 2018/062250 A1 | 05 Apr. 2018 | EP 3521318 A<br>CN 109790227 A<br>KR 10-2019-0045256 A | |
| JP 2017-520885 A | 27 Jul. 2017 | US 2017/0084911 A1<br>WO 2015/176201 A1<br>EP 3146578 A1<br>KR 10-2017-0009890 A<br>CN 106463728 A | |
| JP 2018-156891 A | 04 Oct. 2018 | (Family: none) | |

Form PCT/ISA/210 (patent family annex) (January 2015)

INTERNATIONAL SEARCH REPORT

International application No.
PCT/JP2021/003287

<Continuation of Box No. III>

The invention in claims 1 and 4-8 has the special technical feature of "condition (B): satisfying that a viscosity ratio ($Vr_1$ = Vb/Va) of a viscosity Vb (30 rpm, 23 °C) when formed into an aqueous dispersion having a solid content of 3% (w/v) to a viscosity Va (30 rpm, 23 °C) when formed into an aqueous dispersion having a solid content of 2% (w/v) is larger than 3."

Meanwhile, the invention in claims 2-3 and 9-10 and the invention in claims 1 and 4-8 share the common technical feature of a "binder for a non-aqueous electrolyte secondary battery characterized by comprising carboxymethyl cellulose and/or a salt thereof, wherein the carboxymethyl cellulose and/or the salt thereof satisfies condition (A) below. Condition (A): satisfying that a carboxylmethyl substitution degree per glucose unit is 0.5-1.5," but said technical feature does not make a contribution over the prior art in light of the disclosure of WO 2016/039271 A1, and thus cannot be considered a special technical feature. In addition, there are no other identical or corresponding special technical features between these inventions.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5599527 B
- JP 2017174829 A